# EUROPEAN PATENT SPECIFICATION

(11) **EP 2 863 685 B1**
(45) Date of publication and mention of the grant of the patent: **06.09.2017**
(21) Application number: 15150895.9
(22) Date of filing: 23.06.2006
(51) Int. Cl.: H04W 48/18, H04W 48/16

(54) **APPARATUS AND METHOD FOR HOME NETWORK SEARCH**
VORRICHTUNG UND VERFAHREN ZUR HEIMNETZWERKSUCHE
DISPOSITIF ET PROCEDE POUR LA RECHERCHE DE RÉSEAU DOMESTIQUE

(30) Priority: 24.06.2005 IN KO05552005
(43) Date of publication of application: 22.04.2015
(62) Divisional of application: 06785524.7
(73) Proprietor: Google Technology Holdings LLC, Mountain View, CA 94043 (US)
(72) Inventor: Howell, Stephen A, Gloucester Gloucestershire GL4 3TQ (GB); Das, Prashanti, Bangalore, Kamataka 560043 (IN); Ramachandra, Srikrishna, Bangalore, Kamakata 560030 (IN)
(74) Representative: Boult Wade Tennant

(56) References cited:
- US-A1- 2002 119 774
- US-A1- 2005 107 082
- "Non-Access-Stratum (NAS) functions related to Mobile Station (MS) in idle mode", 3GPP TS 23.122 V7.2.0 , 15 June 2005 (2005-06-15), XP002400554, Retrieved from the Internet: URL:http://www.3gpp.org/ftp/Specs/archive/ 23_series/23.122/23122-720.zip [retrieved on 2006-09-26]

## Description

### Technical Field

The invention relates to a method and to a mobile communication device for home network search.

### Background Art

Presently, a mobile communication device cannot move to its home public land mobile network (HPLMN) during a periodic public land mobile network (PLMN) search when the mobile is registered on a visiting public land mobile network (VPLMN) using a different mobile country code (MCC) from its HPLMN. For example, the mobile communication device is effectively outside of its home country. This limitation creates problems when the mobile communication device is in a country which shares multiple country codes. For example Hong Kong became part of China and some of the existing operators continue to use different country codes. Also, many countries have multiple MCC's allocated for use by different operators and therefore, the use of a single MCC to identify a country is not always possible. For example most countries in Europe have two MCC's allocated to the geographical region.

Unfortunately, a user of a mobile communication device, under such conditions, potentially ends up paying more due to being registered, or "roaming," on a VPLMN even though the user may be in the vicinity of the HPLMN. An operator of an HPLMN can also potentially loose out on revenue because its subscribers will be roaming all of the time after loosing coverage of the HPLMN as long as the VPLMN coverage exists.

For example, a mobile communication device can lose coverage of the HPLMN and moves to a different VPLMN with a different country code in the same country. After a while the mobile communication device may come back to coverage of an overlap area of the HPLMN and the VPLMN. Unfortunately, because the VPLMN has a different country code from the HPLMN, the mobile communication device is forbidden from camping and registering on its HPLMN, even if it was originally registered on its HPLMN in the current vicinity.

Thus, there is a need for performing a HPLMN search while in a VPLMN network that is using a different mobile country code from the HPLMN but is in a concurrent region with the HPLMN.

A 3GPP technical specification entitled '3^{rd} Generation Partnership Project; Technical Specification Group Core Network and Terminals; Non-Access-Stratum (NAS) functions related to Mobile Station (MS) in idle mode (Release 7)', 3GPP TS 23.122 V7.2.0, discusses, in section 3.1, PLMN selection and roaming in idle mode operation.

US patent application publication no. US 2005/0107082 describes a network selection method and apparatus with home network prioritization in country border regions. A mobile station is associated with a home communication network having a home MCC. Outside of the home network country, however, the mobile station selects and operates with a non-home communication network having a visiting MCC. After expiration of a timer, the mobile station scans to identify a plurality of networks in a coverage area within which the mobile station is operating. If the home network having the home MCC is identified as being available, the mobile station selects and operates with the home network. Otherwise, if the non-home network having the visiting MCC is identified as being available, the mobile station selects and operates with the non-home network.

US patent application publication no. US 2002/0119774 describes a method for selecting a PLMN to serve a mobile station including the step of receiving at the mobile station the MCC of neighboring countries. If a preferred PLMN (e.g. the HPLMN) of the mobile station is associated with one of the provided MCCs, the mobile station searches for the preferred PLMN by scanning for the PLMN. Once the preferred PLMN is found, the mobile station changes to the preferred PLMN.

### SUMMARY

In accordance with aspects of the present invention, there is provided a method in a mobile communication device and a mobile communication device, as recited in the accompanying claims.

### BRIEF DESCRIPTION OF THE DRAWINGS

The embodiments of the present disclosure will be described with reference to the following figures, wherein like numerals designate like elements, and wherein:
Fig. 1 is an exemplary block diagram of a system;
Fig. 2 is an exemplary block diagram of a mobile communication device ;
Fig. 3 is an exemplary flowchart illustrating the operation of a mobile communication device; and
Fig. 4 is an exemplary flowchart illustrating the operation of a mobile communication device.

### DISCLOSURE OF THE INVENTION

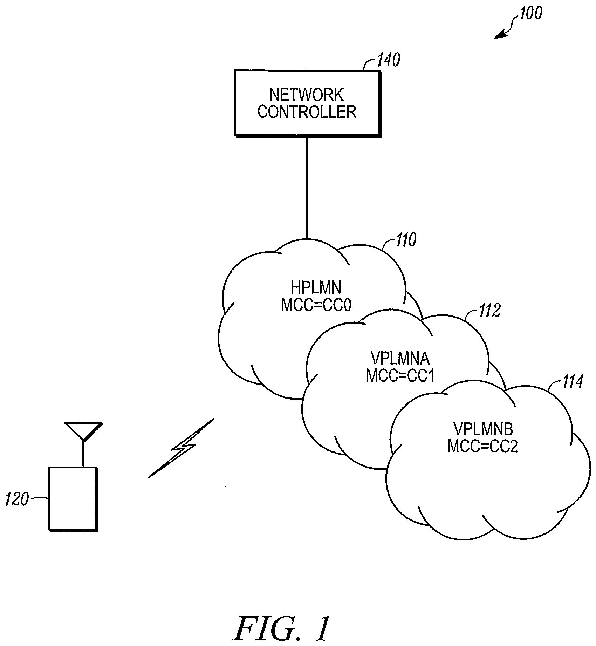

Fig. 1 is an exemplary block diagram of a system 100 according to one embodiment. The system 100 can include a network controller 140, a home network 110, visiting networks 112 and 114, and a terminal 120. The terminal 120 may be a mobile communication device, such as wireless telephone, a cellular telephone, a personal digital assistant, a pager, a personal computer, a selective call receiver or any other device that is capable of sending and receiving communication signals on a network including wireless network.

In an exemplary embodiment, the network controller 140 can be connected to the home network 110. The network controller 140 may be located at a base station, at a radio network controller, or anywhere else on the network 110. The network controller 140 may also or alternately be connected to the visiting networks 112 and 114. The networks 110, 112, and 114 may include any type of network that is capable of sending and receiving signals, such as wireless signals. For example, the network 110 may include a wireless telecommunications network, a cellular telephone network, a satellite communications network, and other like communications systems. Furthermore, the network 110 may include more than one network and may include a plurality of different types of networks. Thus, the networks 110, 112, and 114 may include a plurality of data networks, a plurality of telecommunications networks, a combination of data and telecommunications networks and other like communication systems capable of sending and receiving communication signals. The home network 110 can be a home public land mobile network (HPLMN) with a mobile country code (MCC) of CC0. The visiting network 112 can be a visiting public land mobile network (VPLMN) with a MCC of CCl. The visiting network 114 can be a VPLMN with a MCC of CC2. The HPLMN 110 can have at least one first country code of a plurality of country codes, the at least one first country code being the home country code. Also, the VPLMN 112 can have at least one second country code of a plurality of country codes, the at least one second country code being a visiting country code. For example, the VPLMN 112 can be a PLMN, different from the HPLMN 110, where the MCC part of the PLMN identity is the same as MCC of the international mobile subscriber identity or the MCC part of the PLMN identity and MCC of the HPLMN are alternate country codes.

In operation, the HPLMN 110 can be the home network of the terminal 120. The terminal 120 can store an alternate country code for the HPLMN 110 as a second country code. The alternate country code can be different from any MCC's assigned to the HPLMN. The alternate country code for the HPLMN 110 can be stored in a public land mobile network list on a subscriber identity module (SIM) in the terminal 120. The terminal 120 can operate on the HPLMN. The terminal 120 may lose coverage of the HPLMN 110 and detect coverage of the VPLMN 112. The terminal 120 can then operate on the VPLMN 112 having the second country code. While operating on the VPLMN 112, the terminal 120 can perform a public land mobile network search and switch to the HPLMN 110 based on the public land mobile network search. The terminal can also receive an over the air refresh message for modifying stored country codes and modify country codes stored in the terminal 120 based on the over the air refresh message.

Thus, for example, an entry in a SIM card can be used by the terminal 120 when making decisions on whether or not to perform a switch to the HPLMN 110. This entry can be pre-programmed by a network operator at the time of subscription or can be dynamically changed using the "Over The Air" programming.

An exemplary entry can look like the following where:
• M = 8 : Maximum number of alternate country codes for one home country,
• K <= M : Actual number of alternate country codes for one home country,
• HCC is the home country code, and
• If K > M, then K+1th to M entries can be invalid:

| HCC |
|---|
| K (<= M) (Actual number of alternate country codes). 5 |
| HCC1 |
| HCC2 |
| ... |
| HCCK |

From the table for the HPLMN, which bears the country code as HCC, the country codes HCCl through HCCK can be treated as "alternate country codes" and the terminal 120 can be allowed to switch back to the HPLMN if it is on a PLMN bearing the country code belonging to any of HCC1 through HCCK. Similarly, the terminal 120 can be allowed to switch to a higher preferred PLMN bearing the country code belonging to any of HCC1 through HCCK, if it is currently on a PLMN bearing the country codes belonging to any of HCC1 through HCCK.

To accommodate the case of a user card where the terminal 120 can have multiple HPLMN codes, this structure can be expanded where:
- N : Maximum number of HPLMN identities,
- M(=8) : Maximum number of alternate country codes, and
- iK : the identity for the ith HPLMN ID, where ik <=M,

| |
|---|
| Ith entry HCC - i |
| iK(<=M) (No. of valid alternate country codes) |
| HCC - i1 |
| HCC - i2 |
| ... |
| HCC - iK |
| (If (ik < M), then ik+1th to M entries can be invalid). |
| Jth entry HCC - j |
| jK : No. of valid alternate country codes |
| HCC - j1 |
| HCC - j2 |
| ... |
| HCC - jK |
| ... |
| ... |
| Nth entry HCC - N |
| NK-No. of valid alternate country codes |
| HCC - N1 |
| HCC - N2 |
| ... |
| HCC-NK |
| ... |

Thus, the terminal 120 can come back to the HPLMN 110 from the VPLMN 112. For example, the terminal 120 may coverage and camp on a VPLMN with a different country code as Home country code. The terminal 120 may come back to an overlap coverage area of the HPLMN 110 and the VPLMN 112. The terminal 120 can then come back to the HPLMN 110 from the VPLMN 112.

Without this disclosure, the terminal 120 is not be able to come back to HPLMN as long as it is in overlap area of the VPLMN 112 and the HPLMN 110. The disclosure allows for a SIM element 'Alternate home country codes' file that indicates a visited country code and a home country code are equivalent. The terminal 120 can then come back to the home network.

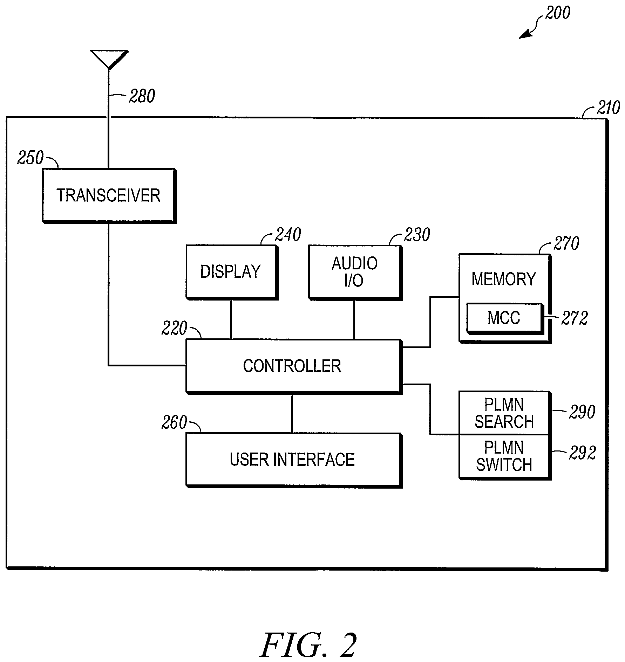

Fig. 2 is an exemplary block diagram of a mobile communication device 200, such as the terminal 120, according to one embodiment. The mobile communication device 200 can include a housing 210, a controller 220 coupled to the housing 210, audio input and output circuitry 230 coupled to the housing 210, a display 240 coupled to the housing 210, a transceiver 250 coupled to the housing 210, a user interface 260 coupled to the housing 210, a memory 270 coupled to the housing 210, and an antenna 280 coupled to the housing 210 and the transceiver 250. The mobile communication device 200 can also include a PLMN search module 290 and a PLMN switch module 292. The PLMN search module 290 and the PLMN switch module 292 can be coupled to the controller 220, can reside within the controller 220, can reside within the memory 270, can be autonomous modules, can be software, can be hardware, or can be in any other format useful for a module on a mobile communication device 200.

The display 240 can be a liquid crystal display (LCD), a light emitting diode (LED) display, a plasma display, or any other means for displaying information. According to one embodiment, the display 240 can, but does not need to indicate when the mobile communication device is roaming on a VPLMN other than the HPLMN. The transceiver 250 may include a transmitter and/or a receiver. The audio input and output circuitry 230 can include a microphone, a speaker, a transducer, or any other audio input and output circuitry. The user interface 260 can include a keypad, buttons, a touch pad, a joystick, an additional display, or any other device useful for providing an interface between a user and an electronic device. The memory 270 may include a random access memory, a read only memory, an optical memory, a subscriber identity module memory, or any other memory that can be coupled to a mobile communication device. The memory 270 can include mobile country code storage 272. The mobile country code storage 272 can include an alternate country code 272 for the home public land mobile network 110. The mobile country code storage 272 can be located on a subscriber identity module memory. Furthermore the mobile country code storage can include multiple country codes for the HPLMN 110 including at least one alternate country code for the HPLMN 110. Thus, the HPLMN can have at least one MCC, such as a home MCC and the VPLMN can have at least one MCC.

The alternate country code can be the same code as a VPLMN country code. For example, the alternate country code for the HPLMN 110 can be CC 1. Thus, when the mobile communication device 200 is operating on the VPLMN 112 with a MCC=CC1, the mobile communication device 200 can know that it may be possible to operate on the HPLMN 110 because the alternate country code for the HPLMN 110 is the same as the MCC for the VPLMN 112.

In operation, the controller 220 can operate the mobile communication device 200 on a VPLMN 112 having a second country code CC1. The PLMN search module 290 can perform a public land mobile network search. The public land mobile network search can be a higher priority public land mobile network search that searches for a higher priority PLMN than the current PLMN. The PLMN switch module 292 can switch the mobile communication device 200 to the HPLMN 110 based on the public land mobile network search. The PLMN search module 290 can detect the HPLMN 110 and the PLMN switch module 292 can switch to the HPLMN 110 based on the PLMN search module 290 detecting the HPLMN 110. The transceiver 250 can receive an over the air refresh message for modifying country codes stored in the memory 270 and the controller 220 can modify the stored country codes based on the over the air refresh message.

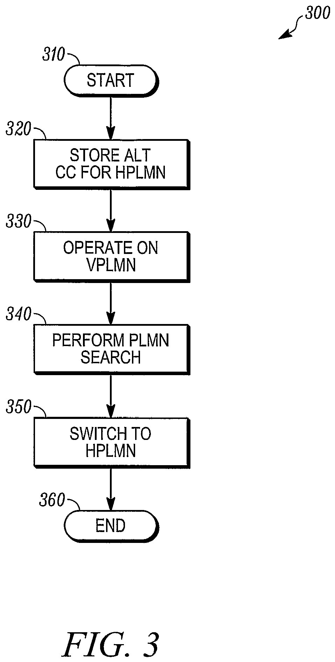

Fig. 3 is an exemplary flowchart 300 illustrating the operation of the mobile communication device 200 according to one embodiment. In step 310, the flowchart begins. In step 320, the mobile communication device 200 can store an alternate country code for the HPLMN 110. The mobile communication device 200 can store the alternate country code for the HPLMN 110 in a public land mobile network list on a subscriber identity module. Also, the mobile communication device 200 can store multiple country codes for the HPLMN 110 and the multiple country codes can include the alternate country code for the HPLMN 110. The mobile communication device 200 can receive an over the air refresh message for modifying stored country codes and modify the stored country codes based on the over the air refresh message.

In step 330, the mobile communication device 200 can operate on the VPLMN 112 having a second country code. The alternate country code can be the same code as the second country code. In step 340 the mobile communication device 200 can perform a public land mobile network search. The public land mobile network search can be a higher priority public land mobile network search. In step 350, the mobile communication device 200 can switch to the HPLMN 110 based on the public land mobile network search. The mobile communication device 200 can detect the HPLMN 110 while performing the public land mobile network search in step 340 and can then switch to the home public land mobile network in step 350 based on detecting the HPLMN 110. In step 360, the flowchart 300 ends.

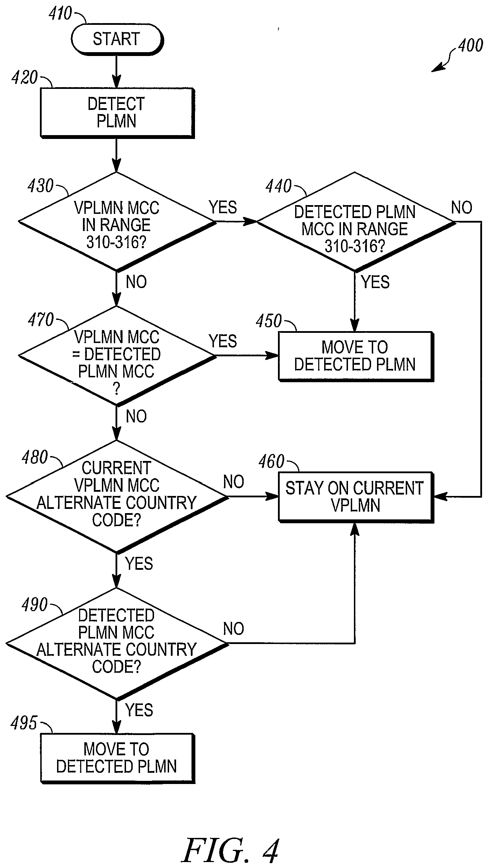

Fig. 4 is an exemplary flowchart 400 illustrating the operation of the mobile communication device 200 according to another embodiment. This flowchart 400 illustrates an example of the operation of a PLMN higher priority search in determining whether to switch to a detected PLMN while operating on a VPLMN 112.

In step 410, the flowchart begins. In step 420, the mobile communication device 200 can detect a PLMN other than the VPLMN 112 on which it is operating. In step 430, the mobile communication device 200 can determine if the MCC of the VPLMN 112 is in the range of 310-316. This step can be used because current standards assign the United States to a range of MCC's from 310-316 and have special rules for these MCC's. However this step may not be necessary if the standards change. If the answer to step 430 is yes, in step 440, the mobile communication device 200 determines if the detected PLMN MCC is in the range of 310-316. If so, in step 450, the mobile communication device 200 moves to the detected PLMN. If not, in step 460, the mobile communication device 200 stays on the current VPLMN 112.

If the answer to step 430 is no, in step 470, the mobile communication device 200 can determine if the current VPLMN MCC is the same as the detected PLMN MCC. If so, in step 450, the mobile communication device 200 can move to the detected VPLMN. If not, in step 480, the mobile communication device 200 can determine if the current VPLMN MCC is an alternate country code for the HPLMN 110. If not, in step 460, the mobile communication device 200 stays on the current VPLMN 112. If so, in step 490, the mobile communication device 200 can determine if the detected VPLMN MCC is an alternate country code for the HPLMN 110. If not, in step 460, the mobile communication device 200 stays on the current VPLMN 112. If so, in step 495, the mobile communication device 200 can move to the detected VPLMN.

The method of this disclosure is preferably implemented on a programmed processor. However, the controllers, flowcharts, and modules may also be implemented on a general purpose or special purpose computer, a programmed microprocessor or microcontroller and peripheral integrated circuit elements, an ASIC or other integrated circuit, a hardware electronic or logic circuit such as a discrete element circuit, a programmable logic device such as a PLD, PLA, FPGA or PAL, or the like. In general, any device on which resides a finite state machine capable of implementing the flowcharts shown in the Figures may be used to implement the processor functions of this disclosure.

While this disclosure has been described with specific embodiments thereof, it is evident that many alternatives, modifications, and variations will be apparent to those skilled in the art. For example, various components of the embodiments may be interchanged, added, or substituted in the other embodiments. Also, all of the elements of each figure are not necessary for operation of the disclosed embodiments. For example, one of ordinary skill in the art of the disclosed embodiments would be enabled to make and use the teachings of the disclosure by simply employing the elements of the independent claims. Accordingly, the preferred embodiments of the disclosure as set forth herein are intended to be illustrative, not limiting. Various changes may be made without departing from the scope of the invention as defined by the appended claims.

## Claims

1. A method in a mobile communication device (120, 200) comprising:
operating, using a controller (220), the mobile communication device (120, 200) on a visiting public land mobile network (112, 114), the visiting public land mobile network having a first country code;
detecting (420), using the controller, a public land mobile network other than the visiting public land mobile network, the public land mobile network having a second country code;
detecting (430), using the controller, whether or not the first country code is within a predetermined range, the predetermined range corresponding to country codes to which special rules apply; the method further **characterised in that** when the first country code is within the predetermined range, determining (440), using the controller, whether or not the second country code of the public land mobile network is within the predetermined range; and
when both the first country code and the second country code are within the predetermined range, moving (450), using the controller, the mobile communication device (120, 200) to the detected public land mobile network.

2. The method of claim 1, wherein when the first country code is within the predetermined range and the second country code is not within the predetermined range, the mobile communication device (120, 200) stays (460) on the visiting public land mobile network (112, 114).

3. The method of claim 1, wherein when the first country code is not within the predetermined range, determining (470), using the controller, whether or not the first country code is the same as the second country code; and
when the first country code is the same as the second country code, moving (450), using the controller, the mobile communication device (120, 200) to the detected public land mobile network.

4. The method of claim 3, wherein when the first country code is not the same as the second country code, determining (480), using the controller, whether or not the first country code is an alternate country code for a home public land mobile network (110); and
when the first country code is not an alternate country code for a home public land mobile network (110), the mobile communication device (120, 200) stays (460) on the visiting public land mobile network (112, 114).

5. The method of claim 3, wherein when the first country code is not the same as the second country code, determining (480), using the controller, whether or not the first country code is an alternate country code for a home public land mobile network (110);
when the first country code is an alternate country code for a home public land mobile network (110), determining (490), using the controller, whether or not the second country code is an alternate country code for a home public land mobile network (110); and
when the second country code is an alternate country code for a home public land mobile network (110), moving (495), using the controller, the mobile communication device (120, 200) to the public land mobile network.

6. The method of claim 3, wherein when the first country code is not the same as the second country code, determining (480), using the controller, whether or not the first country code is an alternate country code for a home public land mobile network (110);
when the first country code is an alternate country code for a home public land mobile network (110), determining (490), using the controller, whether or not the second country code is an alternate country code for a home public land mobile network (110); and
when the second country code is not an alternate country code for a home public land mobile network, the mobile communication device (120, 200) stays (460) on the visiting public land mobile network (112, 114).

7. A mobile communication device (120, 200) comprising:
a memory (270) including an alternate country code for a home public land mobile network (110); and
a controller (220) coupled to the memory (270), the controller (220) configured to:
operate the mobile communication device on a visiting public land mobile network (112, 114), the visiting public land mobile network (112, 114) having a first country code;
detect a public land mobile network other than the visiting public land mobile network (112, 114), the public land mobile network having a second country code;
detect whether or not the first country code is within a predetermined range, the predetermined range corresponding to country codes to which special rules apply; the mobile communication device further **characterised in that** the controller is further configured to,
when the first country code is within the predetermined range, determine whether or not the second country code of the public land mobile network is within the predetermined range; and
when both the first country code and the second country code are within the predetermined range, move the mobile communication device (120, 200) to the detected public land mobile network.

8. The mobile communication device of claim 7, wherein when the first country code is within the predetermined range and the second country code is not within the predetermined range, the mobile communication device is configured to stay on the visiting public land mobile network (112, 114).

9. The mobile communication device of claim 7, wherein when the first country code is not within the predetermined range, the controller (220) is configured to determine whether or not the first country code is the same as the second country code; and
when the first country code is the same as the second country code, the controller (220) is configured to move the mobile communication device (120, 200) to the detected public land mobile network.

10. The mobile communication device of claim 9, wherein when the first country code is not the same as the second country code, the controller (220) is configured to determine whether or not the first country code is an alternate country code for a home public land mobile network (110); and
when the first country code is not an alternate country code for a home public land mobile network (110), the mobile communication device is configured to stay on the visiting public land mobile network (112, 114).

11. The mobile communication device of claim 9, wherein when the first country code is not the same as the second country code, the controller (220) is configured to determine whether or not the first country code is an alternate country code for a home public land mobile network (110);
when the first country code is an alternate country code for a home public land mobile network (110), the controller (220) is configured to determine whether or not the second country code is the alternate country code for a home public land mobile network (110); and
when the second country code is an alternate country code for a home public land mobile network, the controller (220) is configured to move the mobile communication device (120, 200) to the public land mobile network.

12. The mobile communication device of claim 9, wherein when the first country code is not the same as the second country code, the controller (220) is configured to determine whether or not the first country code is an alternate country code for a home public land mobile network (110);
when the first country code is an alternate country code for a home public land mobile network (110), the controller (220) is configured to determine whether or not the second country code is an alternate country code for the home public land mobile network (110); and
when the second country code is not an alternate country code for the home public land mobile network (110), the mobile communication device (120, 200) is configured to stay on the visiting public land mobile network (112, 114).

## Patentansprüche

1. Verfahren in einem mobilen Kommunikationsgerät (120, 200), umfassend:
Betreiben, mithilfe eines Controllers (220), des mobilen Kommunikationsgeräts (120, 200) in einem öffentlichen terrestrischen Besucher-Mobilfunknetz (112, 114), wobei das öffentliche terrestrische Besucher-Mobilfunknetz einen ersten Ländercode hat;
Erkennen (420), mithilfe des Controllers, eines anderen öffentlichen terrestrischen Mobilfunknetzes als das öffentliche terrestrische Besucher-Mobilfunknetz, wobei das Mobilfunknetz einen zweiten Ländercode hat;
Erkennen (430), mithilfe des Controllers, ob sich der erste Ländercode innerhalb eines vorher festgelegten Bereichs befindet, wobei der vorher festgelegte Bereich Ländercodes entspricht, für die spezielle Regeln gelten;
das Verfahren ferner **dadurch gekennzeichnet, dass**,
wenn sich der erste Ländercode innerhalb des vorher festgelegten Bereichs befindet, Ermitteln (440), mithilfe des Controllers, ob sich der zweite Ländercode des öffentlichen terrestrischen Mobilfunknetzes innerhalb des vorher festgelegten Bereichs befindet; und
wenn sich sowohl der erste Ländercode als auch der zweite Ländercode innerhalb des vorher festgelegten Bereichs befinden, Bewegen (450), mithilfe des Controllers, des mobilen Kommunikationsgeräts (120, 200) zum erkannten öffentlichen terrestrischen Mobilfunknetz.

2. Verfahren nach Anspruch 1, wobei, wenn sich der erste Ländercode innerhalb des vorher festgelegten Bereichs befindet, und sich der zweite Ländercode nicht innerhalb des vorher festgelegten Bereichs befindet, das mobile Kommunikationsgerät (120, 200) im öffentlichen terrestrischen Besucher-Mobilfunknetz (112, 114) bleibt (460).

3. Verfahren nach Anspruch 1, wobei, wenn sich der erste Ländercode nicht innerhalb des festgelegten Bereichs befindet, mithilfe des Controllers ermittelt wird (470), ob der erste Ländercode gleich dem zweiten Ländercode ist oder nicht; und
wenn der erste Ländercode gleich dem zweiten Ländercode ist, Bewegen (450), mithilfe des Controllers, des mobilen Kommunikationsgeräts (120, 200) zum erkannten öffentlichen terrestrischen Mobilfunknetz.

4. Verfahren nach Anspruch 3, wobei, wenn der erste Ländercode nicht gleich dem zweiten Ländercode ist, mithilfe des Controllers ermittelt wird (480), ob der erste Ländercode ein alternativer Ländercode für ein öffentliches terrestrisches Heim-Mobilfunknetz (110) ist; und
wenn der erste Ländercode kein alternativer Ländercode für ein öffentliches terrestrisches Heim-Mobilfunknetz (110) ist, das mobile Kommunikationsgerät (120, 200) im öffentlichen terrestrischen Besucher-Mobilfunknetz (112, 114) bleibt (460).

5. Verfahren nach Anspruch 3, wobei, wenn der erste Ländercode nicht gleich dem zweiten Ländercode ist, mithilfe des Controllers ermittelt wird (480), ob der erste Ländercode ein alternativer Ländercode für ein öffentliches terrestrisches Heim-Mobilfunknetz (110) ist;
wenn der erste Ländercode ein alternativer Ländercode für ein öffentliches terrestrisches Heim-Mobilfunknetz (110) ist, Ermitteln (490), mithilfe des Controllers, ob der zweite Ländercode ein alternativer Ländercode für ein öffentliches terrestrisches Heim-Mobilfunknetz (110) ist; und
wenn der zweite Ländercode ein alternativer Ländercode für ein öffentliches terrestrisches Heim-Mobilfunknetz (110) ist, Bewegen (495), mithilfe des Controllers, des mobilen Kommunikationsgeräts (120, 200) zum öffentlichen terrestrischen Mobilfunknetz.

6. Verfahren nach Anspruch 3, wobei, wenn der erste Ländercode nicht gleich dem zweiten Ländercode ist, mithilfe des Controllers ermittelt wird (480), ob der erste Ländercode ein alternativer Ländercode für ein öffentliches terrestrisches Heim-Mobilfunknetz (110) ist;
wenn der erste Ländercode ein alternativer Ländercode für ein öffentliches terrestrisches Heim-Mobilfunknetz (110) ist, Ermitteln (490), mithilfe des Controllers, ob der zweite Ländercode ein alternativer Ländercode für ein öffentliches terrestrisches Heim-Mobilfunknetz (110) ist; und
wenn der zweite Ländercode kein alternativer Ländercode für ein öffentliches terrestrisches Heim-Mobilfunknetz ist, das mobile Kommunikationsgerät (120, 200) im öffentlichen terrestrischen Besucher-Mobilfunknetz (112, 114) bleibt (460).

7. Mobiles Kommunikationsgerät (120, 200), umfassend:
einen Speicher (270), der einen alternativen Ländercode für ein öffentliches terrestrisches Mobilfunknetz (110) beinhaltet; und
einen Controller (220), der mit dem Speicher (270) gekoppelt ist, wobei der Controller (220) konfiguriert ist, um:
das mobile Kommunikationsgerät in einem öffentlichen terrestrischen Besucher-Mobilfunknetz (112, 114) zu betreiben, wobei das öffentliche terrestrische Besucher-Mobilfunknetz (112, 114) einen ersten Ländercode hat;
ein anderes öffentliches terrestrisches Mobilfunknetz als das öffentliche terrestrische Besucher-Mobilfunknetz (112, 114) zu erkennen, wobei das öffentliche terrestrische Mobilfunknetz einen zweiten Ländercode hat;
zu erkennen, ob sich der erste Ländercode innerhalb eines vorher festgelegten Bereichs befindet, wobei der vorher festgelegte Bereich Ländercodes entspricht, für die spezielle Regeln gelten;
das mobile Kommunikationsgerät ferner **dadurch gekennzeichnet, dass** der Controller ferner konfiguriert ist, um,
wenn sich der erste Ländercode innerhalb des vorher festgelegten Bereichs befindet, zu ermitteln, ob sich der zweite Ländercode des öffentlichen terrestrischen Mobilfunknetzes innerhalb des vorher festgelegten Bereichs befindet; und
wenn sich sowohl der erste Ländercode als auch der zweite Ländercode innerhalb des vorher festgelegten Bereichs befinden, das mobile Kommunikationsgerät (120, 200) zum erkannten
öffentlichen terrestrischen Mobilfunknetz zu bewegen.

8. Mobiles Kommunikationsgerät nach Anspruch 7, wobei, wenn sich der erste Ländercode innerhalb des vorher festgelegten Bereichs befindet, und sich der zweite Ländercode nicht innerhalb des vorher festgelegten Bereichs befindet, das mobile Kommunikationsgerät konfiguriert ist, im öffentlichen terrestrischen Besucher-Mobilfunknetz (112, 114) zu bleiben.

9. Mobiles Kommunikationsgerät nach Anspruch 7, wobei, wenn sich der erste Ländercode nicht innerhalb des festgelegten Bereichs befindet, der Controller (220) konfiguriert ist, zu ermitteln, ob der erste Ländercode gleich dem zweiten Ländercode ist oder nicht; und
wenn der erste Ländercode gleich dem zweiten Ländercode ist, der Controller (220) konfiguriert ist, das mobile Kommunikationsgerät (120, 200) zum erkannten öffentliche terrestrischen Mobilfunknetz zu bewegen.

10. Mobiles Kommunikationsgerät nach Anspruch 9, wobei, wenn der erste Ländercode nicht gleich dem zweiten Ländercode ist, der Controller (220) konfiguriert ist, zu ermittelt, ob der erste Ländercode ein alternativer Ländercode für das öffentliche terrestrische Heim-Mobilfunknetz (110) ist; und
wenn der erste Ländercode kein alternativer Ländercode für ein öffentliches terrestrisches Heim-Mobilfunknetz (110) ist, das mobile Kommunikationsgerät konfiguriert ist, im öffentlichen terrestrischen Besucher-Mobilfunknetz (112, 114) zu bleiben.

11. Mobiles Kommunikationsgerät nach Anspruch 9, wobei, wenn der erste Ländercode nicht gleich dem zweiten Ländercode ist, der Controller (220) konfiguriert ist, zu ermitteln, ob der erste Ländercode ein alternativer Ländercode für das öffentliche terrestrische Mobilfunknetz (110) ist;
wenn der erste Ländercode ein alternativer Ländercode für ein öffentliches terrestrisches Heim-Mobilfunknetz (110) ist, der Controller (220) konfiguriert ist, zu ermitteln, ob der zweite Ländercode der alternative Ländercode für ein öffentliches terrestrisches Heim-Mobilfunknetz (110) ist; und
wenn der zweite Ländercode ein alternativer Ländercode für ein öffentliches terrestrisches Heim-Mobilfunknetz ist, der Controller (220) konfiguriert ist, das mobile Kommunikationsgerät (120, 200) zum öffentlichen terrestrischen Mobilfunknetz zu bewegen.

12. Mobiles Kommunikationsgerät nach Anspruch 9, wobei, wenn der erste Ländercode nicht gleich dem zweiten Ländercode ist, der Controller (220) konfiguriert ist, zu ermitteln, ob der erste Ländercode ein alternativer Ländercode für ein öffentliches terrestrisches Heim-Mobilfunknetz (110) ist;
wenn der erste Ländercode ein alternativer Ländercode für ein öffentliches terrestrisches Heim-Mobilfunknetz (110) ist, der Controller (220) konfiguriert ist, zu ermitteln, ob der zweite Ländercode ein alternativer Ländercode für das öffentliche terrestrische Heim-Mobilfunknetz (110) ist; und
wenn der zweite Ländercode kein alternativer Ländercode für das öffentliche terrestrische Heim-Mobilfunknetz (110) ist, das mobile Kommunikationsgerät (120, 200) konfiguriert ist, im öffentlichen terrestrischen Besucher-Mobilfunknetz (112, 114) zu bleiben.

## Revendications

1. Procédé dans un dispositif de communication mobile (120, 200) comprenant :
la mise en fonctionnement, en utilisant un contrôleur (220), du dispositif de communication mobile (120, 200) sur un réseau mobile terrestre public visitant (112, 114), le réseau mobile terrestre public visitant ayant un premier code de pays ;
la détection (420), en utilisant le contrôleur, d'un réseau mobile terrestre public autre que le réseau mobile terrestre public visitant, le réseau mobile terrestre public ayant un deuxième code de pays ;
la détection (430), en utilisant le contrôleur, si le premier code de pays est, ou non, dans une plage prédéterminée, la plage prédéterminée correspondant à des codes de pays auxquels des règles particulières s'appliquent ;
le procédé étant en outre **caractérisé par**, lorsque le premier code de pays est dans la plage prédéterminée, la détermination (440), en utilisant le contrôleur, si le deuxième code de pays du réseau mobile terrestre public est, ou non, dans la plage prédéterminée ; et
lorsque le premier code de pays et le deuxième code de pays sont tous deux dans la plage prédéterminée, le déplacement (450), en utilisant le contrôleur, du dispositif de communication mobile (120, 200) au réseau mobile terrestre public détecté.

2. Procédé selon la revendication 1, dans lequel, lorsque le premier code de pays est dans la plage prédéterminée et le deuxième code de pays n'est pas dans la plage prédéterminée, le dispositif de communication mobile (120, 200) reste (460) sur le réseau mobile terrestre public visitant (112, 114).

3. Procédé selon la revendication 1, dans lequel, lorsque le premier code de pays n'est pas dans la plage prédéterminée, la détermination (470), en utilisant le contrôleur, si le premier code de pays est, ou non, le même que le deuxième code de pays ; et
lorsque le premier code de pays est le même que le deuxième code de pays, le déplacement (450), en utilisant le contrôleur, du dispositif de communication mobile (120, 200) au réseau mobile terrestre public détecté.

4. Procédé selon la revendication 3, dans lequel, lorsque le premier code de pays n'est pas le même que le deuxième code de pays, la détermination (480), en utilisant le contrôleur, si le premier code de pays est, ou non, un code de pays alternatif pour un réseau mobile terrestre public de rattachement (110) ; et
lorsque le premier code de pays n'est pas un code de pays alternatif pour un réseau mobile terrestre public de rattachement (110), le dispositif de communication mobile (120, 200) reste (460) sur le réseau mobile terrestre public visitant (112, 114).

5. Procédé selon la revendication 3, dans lequel, lorsque le premier code de pays n'est pas le même que le deuxième code de pays, la détermination (480), en utilisant le contrôleur, si le premier code de pays est, ou non, un code de pays alternatif pour un réseau mobile terrestre public de rattachement (110) ;
lorsque le premier code de pays est un code de pays alternatif pour un réseau mobile terrestre public de rattachement (110), la détermination (490), en utilisant le contrôleur, si le deuxième code de pays est, ou non, un code de pays alternatif pour un réseau mobile terrestre public de rattachement (110) ; et
lorsque le deuxième code de pays est un code de pays alternatif pour un réseau mobile terrestre public de rattachement (110), le déplacement (495), en utilisant le contrôleur, du dispositif de communication mobile (120, 200) au réseau mobile terrestre public.

6. Procédé selon la revendication 3, dans lequel, lorsque le premier code de pays n'est pas le même que le deuxième code de pays, la détermination (480), en utilisant le contrôleur, si le premier code de pays est, ou non, un code de pays alternatif pour un réseau mobile terrestre public de rattachement (110) ;
lorsque le premier code de pays est un code de pays alternatif pour un réseau mobile terrestre public de rattachement (110), la détermination (490), en utilisant le contrôleur, si le deuxième code de pays est, ou non, un code de pays alternatif pour un réseau mobile terrestre public de rattachement (110) ; et
lorsque le deuxième code de pays n'est pas un code de pays alternatif pour un réseau mobile terrestre public de rattachement, le dispositif de communication mobile (120, 200) reste (460) sur le réseau mobile terrestre public visitant (112, 114).

7. Dispositif de communication mobile (120, 200) comprenant :
une mémoire (270) incluant un code de pays alternatif pour un réseau mobile terrestre public de rattachement (110) ; et
un contrôleur (220) couplé à la mémoire (270), le contrôleur (220) configuré pour :
faire fonctionner le dispositif de communication mobile sur un réseau mobile terrestre public visitant (112, 114), le réseau mobile terrestre public visitant (112, 114) ayant un premier code de pays ;
détecter un réseau mobile terrestre public autre que le réseau mobile terrestre public visitant (112, 114), le réseau mobile terrestre public ayant un deuxième code de pays ;
détecter si le premier code de pays est, ou non, dans une plage prédéterminée, la plage prédéterminée correspondant à des codes de pays auxquels des règles particulières s'applique ;
le dispositif de communication mobile **caractérisé en outre en ce que** le contrôleur est configuré en outre pour,
lorsque le premier code de pays est dans la plage prédéterminée, la déterminer si le deuxième code de pays du réseau mobile terrestre public est, ou non, dans la plage prédéterminée ; et
lorsque le premier code de pays et le deuxième code de pays sont tous deux dans la plage prédéterminée, déplacer le dispositif de communication mobile (120, 200) au réseau mobile terrestre public détecté.

8. Dispositif de communication mobile selon la revendication 7, dans lequel, lorsque le premier code de pays est dans la plage prédéterminée et le deuxième code de pays n'est pas dans la plage prédéterminée, le dispositif de communication mobile est configuré pour rester sur le réseau mobile terrestre public visitant (112, 114).

9. Dispositif de communication mobile selon la revendication 7, dans lequel, lorsque le premier code de pays n'est pas dans la plage prédéterminée, le contrôleur (220) est configuré pour déterminer si le premier code de pays est, ou non, le même que le deuxième code de pays ; et
lorsque le premier code de pays est le même que le deuxième code de pays, le contrôleur (220) est configuré pour déplacer le dispositif de communication mobile (120, 200) au réseau mobile terrestre public détecté.

10. Dispositif de communication mobile selon la revendication 9, dans lequel, lorsque le premier code de pays n'est pas le même que le deuxième code de pays, le contrôleur (220) est configuré pour déterminer si le premier code de pays est, ou non, un code de pays alternatif pour un réseau mobile terrestre public de rattachement (110) ; et
lorsque le premier code de pays n'est pas un code de pays alternatif pour un réseau mobile terrestre public de rattachement (110), le dispositif de communication mobile est configuré pour rester sur le réseau mobile terrestre public visitant (112, 114).

11. Dispositif de communication mobile selon la revendication 9, dans lequel, lorsque le premier code de pays n'est pas le même que le deuxième code de pays, le contrôleur (220) est configuré pour déterminer si le premier code de pays est, ou non, un code de pays alternatif pour un réseau mobile terrestre public de rattachement (110) ;
lorsque le premier code de pays est un code de pays alternatif pour un réseau mobile terrestre public de rattachement (110), le contrôleur (220) est configuré pour déterminer si le deuxième code de pays est, ou non, le code de pays alternatif pour un réseau mobile terrestre public de rattachement (110) ; et
lorsque le deuxième code de pays est un code de pays alternatif pour un réseau mobile terrestre public de rattachement, le contrôleur (220) est configuré pour déplacer le dispositif de communication dispositif de communication mobile (120, 200) au réseau mobile terrestre public.

12. Dispositif de communication mobile selon la revendication 9, dans lequel, lorsque le premier code de pays n'est pas le même que le deuxième code de pays, le contrôleur (220) est configuré pour déterminer si le premier code de pays est, ou non, un code de pays alternatif pour un réseau mobile terrestre public de rattachement (110) ;
lorsque le premier code de pays est un code de pays alternatif pour un réseau mobile terrestre public de rattachement (110), le contrôleur (220) est configuré pour déterminer si le deuxième code de pays est, ou non, un code de pays alternatif pour le réseau mobile terrestre public de rattachement (110) ; et
lorsque le deuxième code de pays n'est pas un code de pays alternatif pour le réseau mobile terrestre public de rattachement (110), le dispositif de communication mobile (120, 200) est configuré pour rester sur le réseau mobile terrestre public visitant (112, 114).
